Europäisches Patentamt

European Patent Office

Office européen des brevets

(19)

(11) Veröffentlichungsnummer: **0 161 601**
**A2**

(12) # EUROPÄISCHE PATENTANMELDUNG

(21) Anmeldenummer: **85105481.7**

(51) Int. Cl.⁴: **G 06 K 9/20**

(22) Anmeldetag: **06.05.85**

(30) Priorität: **15.05.84 DE 3417946**

(43) Veröffentlichungstag der Anmeldung: **21.11.85**
**Patentblatt 85/47**

(84) Benannte Vertragsstaaten: **DE FR GB IT**

(71) Anmelder: **AGFA-GEVAERT Aktiengesellschaft,**
**D-5090 Leverkusen 1 (DE)**

(72) Erfinder: **Rauffer, Walter, Dipl.-Ing., Obere Seeleite 10,**
**D-8031 Steinebach (DE)**
Erfinder: **Sylla, Jürgen, Dipl.-Ing., Amselweg 18,**
**D-8029 Sauerlach-Arget (DE)**
Erfinder: **Czapla, Günter, Ing.grad., Wallbergstrasse 20,**
**D-8021 Sauerlach (DE)**
Erfinder: **Bachinger, Karl-Heinz, Dipl.-Ing.,**
**Pappenheimer Strasse 7, D-8000 München 2 (DE)**

(54) **Abtaster (OCR-Schriftleser) zum automatischen Lesen von Abbildungen in einem Mikrofilm-Lesegerät.**

(57) Ein Abtaster (OCR-Schriftleser) zum automatischen Lesen von leuchtenden Detailabbildungen eines vergrößerten Mikrobildes in einem Mikrofilm-Lesegerät mit einer Bildwand und einem ein Mikrobild auf diese abbildenden Projektionsstrahlengang, wobei der Abtaster eine über die Detailabbildung führbare optische Vorrichtung aufweist, durch die die Detailabbildung abschnittweise auf einen mit der optischen Vorrichtung bewegbaren elektrooptischen Empfänger abbildbar ist, ist für das automatische Lesen im Auflicht des Projektionsstrahlengangs so ausgebildet, daß der Abtaster (10, 19; 103, 119) im Auflicht des Projektionsstrahlenganges vor der Bildwand (6; 102, 106) anzuordnen ist und daß vor seiner optischen Vorrichtung (21; 123, 124) ein gegen den Projektionsstrahlengang unter etwa 45° geneigter, den Projektionsstrahlengang auf die optische Vorrichtung (21; 123, 124) und den elektrooptischen Empfänger (22; 125) ablenkender Umlenkspiegel (20; 122) zusammen mit ersteren verschiebbar angeordnet ist.

EP 0 161 601 A2

Aktiengesellschaft                    D-5090 Leverkusen 1

Patentabteilung


eh-se


Abtaster (OCR-Schriftleser) zum automatischen Lesen von Abbildungen in einem Mikrofilm-Lesegerät

_____


Die Erfindung betrifft einen Abtaster (OCR-Schriftleser) zum automatischen Lesen von leuchtenden Detailabbildungen eines vergrößerten Mikrobildes in einem Mikrofilm-Lesegerät mit einer Bildwand und einem ein Mikrobild auf diese abbildenden Projektionsstrahlengang, wobei der Abtaster eine über die Detailabbildung führbare optische Vorrichtung aufweist, durch die die Detailabbildung abschnittweise auf einen mit der optischen Vorrichtung bewegbaren elektrooptischen Empfänger abbildbar ist.

Ein Abtastgerät dieser Art ist durch die DE-GMS 83 15 103 bekannt geworden. Dabei hat sich herausgestellt, daß beim automatischen Lesen von Informationen auf einer Durchlichtbildwand Ungenauigkeiten auftreten, die zu Lesefehlern führen können.


A-G 1963

der Erfindung liegt daher die Aufgabe zugrunde, einen Abtaster der eingangs genannten Art so auszubilden und anzuordnen, daß das automatische Lesen im Auflicht des Projektionsstrahlenganges eines Mikrofilm-Lesegerätes erfolgen kann.

Diese Aufgabe wird erfindungsgemäß durch die Merkmale des Hauptanspruchs gelöst. Weitere vorteilhafte Merkmale der Erfindung sind den Unteransprüchen zu entnehmen.

Die Erfindung wird anhand von Zeichnungen näher erläutert. Es zeigen

Fig. 1 eine perspektivische Darstellung eines Auflicht-Mikrofilm-Lesegerätes mit einem erfindungsgemäßen OCR-Schrift-Handleser,

Fig. 2 einen vergrößerten Schnitt durch den OCR-Schrift-Handleser nach Figur 1 in einer Mittelstellung,

Fig. 3 einen Schnitt durch einen in ein Mikrofilm-Lesegerät eingebauten OCR-Schriftleser parallel zur Mikrofilmbühne,

Fig. 4 einen Schnitt durch den OCR-Schriftleser nach Figur 3 senkrecht zur Filmbühne und deren Y-Koordinate,

A-G 1963

- 3 -

0161601

Fig. 5 eine perspektivische, verkleinerte Darstellung eines Lesegeräts nach den Figuren 3 und 4.

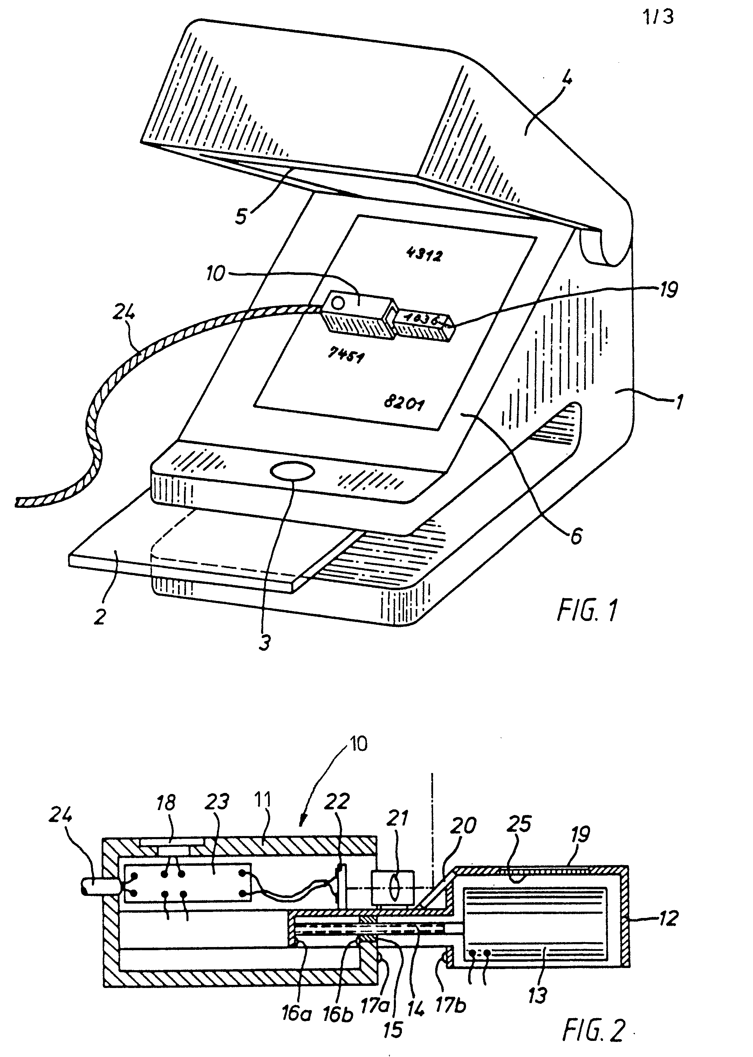

In Figur 1 sind ein übliches Mikrofilm-Lesegerät mit 1, seine Filmbühne mit 2 und die Stelle, aus der der Projektionsstrahlengang austritt, mit 3 bezeichnet. Eine aufklappbare Haube 4 weist innen einen Spiegel 5 auf, von dem der Projektionsstrahlengang auf eine Auflichtlesefläche 6, die schräg nach oben dem Betrachter in geeigneter Leseneigung zugewandt ist, geworfen wird. Um bestimmte Werte eines auf der Auflichtlesefläche 6 projizierten, rückvergrößerten Mikrobildes mit einem sog. OCR-Schriftleser 10 automatisch lesen und weiterverarbeiten zu können, ist ein derartiger automatischer Schriftleser 10 besonders für die Benutzung im Auflichtstrahlengang ausgestaltet worden, wie gemäß Figur 2 im einzelnen gezeigt und nachfolgend näher beschrieben wird.

Im Gehäuse 10 des Lesers ist ein Schieber 12 verschiebbar gelagert. Ein Motor 13 sitzt im Schieber 12 und greift mit der als Feingewindestange ausgebildeten Motorachse 14 in eine Schloßmutter 15 des Gehäuses 10 ein, wodurch bei laufendem Motor 13 eine Schiebebewegung des Schiebers 12 gegenüber dem Gehäuse 10 entsteht. Kontakte 16a und 16b bzw. 17a und 17b an Gehäuse und Schieber ergeben die jeweilige Endabschaltung. Über einen Schalter 18 wird die Bewegung eingeleitet. Es ist auch eine Ausführungsform denkbar, bei der sich der Motor 13 im Gehäuse 10 befindet und die Schloßmutter 15 im Schieber 12.

A-G 1963

Auf dem Schieber 12 befindet sich eine kleine Bildwand 19, auf der die Auflichtprojektion der Detailinformation zu liegen kommt. Wird der Schieber 12 in der
Figur nach links in die Ausgangsstellung bewegt, so
wird das Auflichtluftbild der Detailinformation von
einem optischen System weiter abgebildet. Dieses besteht aus einem Umlenkspiegel 20, einem Objektiv 21 und
einem Lesearray 22. Durch die Bewegung des Schiebers 12
wird die Detailinformation über das Array 22 bewegt und
ergibt eine Folge von elektrischen Signalen an den einzelnen Arraystellen, die über eine gedruckte Schaltung 23 und den Kabelanschluß 24 an eine Computerschnittstelle weitergegeben werden. Da eine Vor- und
Rückbewegung für eine Operation erfolgt, wird das Luftbild zweimal gelesen, was die Erkennungssicherheit wesentlich erhöht. Die Geschwindigkeit kann abhängig vom
angebotenen Licht zusätzlich über einen unter der Fläche 19 angeordneten Sensor 25 gemessen und variabel
wählbar oder automatisch steuerbar sein.

Nach Auswahl der automatisch zu lesenden Detailinformation auf der Auflichtlesefläche 6 wird der Leser 10 in
seiner Ausgangsstellung auf der Fläche 6 so positioniert, daß die zu verarbeitende Zahlengruppe auf der
kleinen Bildwand 19 des Lesers 10 zu liegen kommt. Dann
wird der Schalter 18 betätigt, wodurch der automatische
Lesevorgang in beschriebener Weise durchgeführt wird.
Dabei wird der unter etwa 45° gegenüber dem Auflichtstrahlengang geneigte Spiegel 20 über die Stelle gefahren, in der in der Ausgangsstellung die kleine Bildwand 19 gelegen war, so daß der Spiegel 20 die zu lesende Detailinformation überstreicht und dabei über das

A-G 1963

Objektiv 21 dem Lesearray 22 nacheinander zuführt. Der beschriebene Auflichtleser 10, 12 unterscheidet sich von bekannten automatischen Lesern also vor allem durch einen gegen den Auflichtstrahlengang geneigten Spiegel 20, der die im Auflicht zu lesende Information überstreicht und dadurch dem mitbewegten Objektiv 21 und Lesearray 22 nacheinander zuführt. Unter Umständen könnte das Objektiv 21 entfallen, wenn der optische Weg zwischen Spiegel 20 und Lesearray 22 gleich dem Abstand zwischen dem Spiegel 20 und der Auflichtlesefläche 6 bei auf letztere aufgesetztem Leser 10 ist, so daß ein auf der Auflichtlesefläche scharf abgebildetes vergrößertes Mikrobild automatisch auch auf dem Lesearray 22 scharf abgebildet wird.

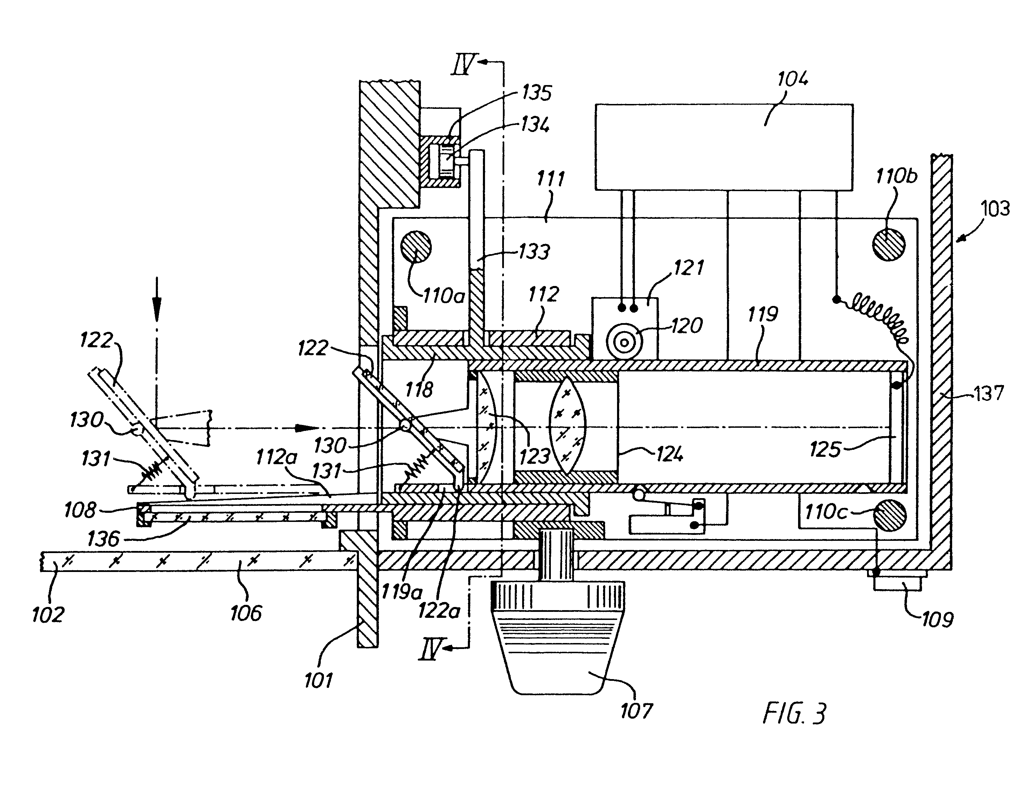

Anhand der Figuren 3 bis 5 wird die Anwendung und Ausbildung des OCR-Schriftlesers im Auflichtstrahlengang hinter einer Durchlichtbildwand eines Mikrofilm-Lesegerätes gezeigt und beschrieben. Dabei wurde gemäß Figur 5 ein Durchlicht-Lesegerät 101 mit einer Durchlichtbildwand 102 mit einer am Bildwandgehäuse seitlich angesetzten Leserstation 103 versehen, die ihrerseits mit einer Erkennungselektronik 104 oder anderen entsprechenden Auswertgeräten verbunden ist. Die Positionierung einer Detailinformation erfolgt im Rahmen einer an der Bildwand 102 vertikal erscheinenden Datenspalte seitlich über der Filmbühne 105 in einem vom Leser erfaßbaren Feld 106. Längs der Höhe dieser Spalte bzw. dieses Feldes 106 ist der Leser mittels eines Handgriffs 107 zusammen mit einer Maske oder einem ein Feld in der Größe einer Detailinformation frei lassenden Rahmen 108 verschiebbar, so daß der Rahmen 108 über der

A-G 1963

Zeile der gewünschten, zu lesenden Detailinformation zu deren Auswahl positionierbar ist. Der Lesevorgang einer Information wird im wesentlichen, wie bereits beim vorhergehenden Ausführungsbeispiel beschrieben, motorisch und elektrisch durchgeführt und ist durch einen Schalter 109 auslösbar.

In dem Gehäuseteil 103 sind vertikale Führungsstangen 110a, 110b, 110c gelagert. Längs dieser Führungsstangen ist ein Träger 111 über den Griff 107 in der Höhe einstellbar. Am Träger 111 ist der Rahmen 108 fest angeordnet, so daß er hinter dem Feld 106 der Bildwand 102 vertikal verschiebbar ist. Außerdem ist am Träger 111 ein hohlzylindrischer Träger 112 zur Lagerung des Lesers fest gelagert. In dem Träger 112 liegt ein drehbares Rohr 118, in dem eine verschiebbare Hülse 119 gelagert ist. Sie wird von einem Zahnrad 120 des Antriebsmotors 121 zum Lesen einer Information aus der ausgezogen gezeichneten Stellung hinter den Feldbereich 106 und zurück bewegt. Die Projektion der zu lesenden, im Rahmen 108 liegenden Daten erfolgt dabei über einen um etwa 45° gegen den Projektionsstrahlengang geneigten Umlenkspiegel 122, der schwenkbar in der Hülse 119 gelagert ist, eine Feldlinse 123, ein Objektiv 124 und einen Fotoempfänger 125. Die Abstände sind dabei so gewählt, daß bei scharfer Abbildung des Bildes auf dem Bildschirm 102, 106 eine Scharfabbildung des entsprechenden Infrarotbereiches des Projektionsstrahlenganges auf der Fotoempfängerfläche entsteht. Eine Justierung kann durch eine Lageveränderung der Feldlinse 123 erfolgen.

A-G 1963

0161601

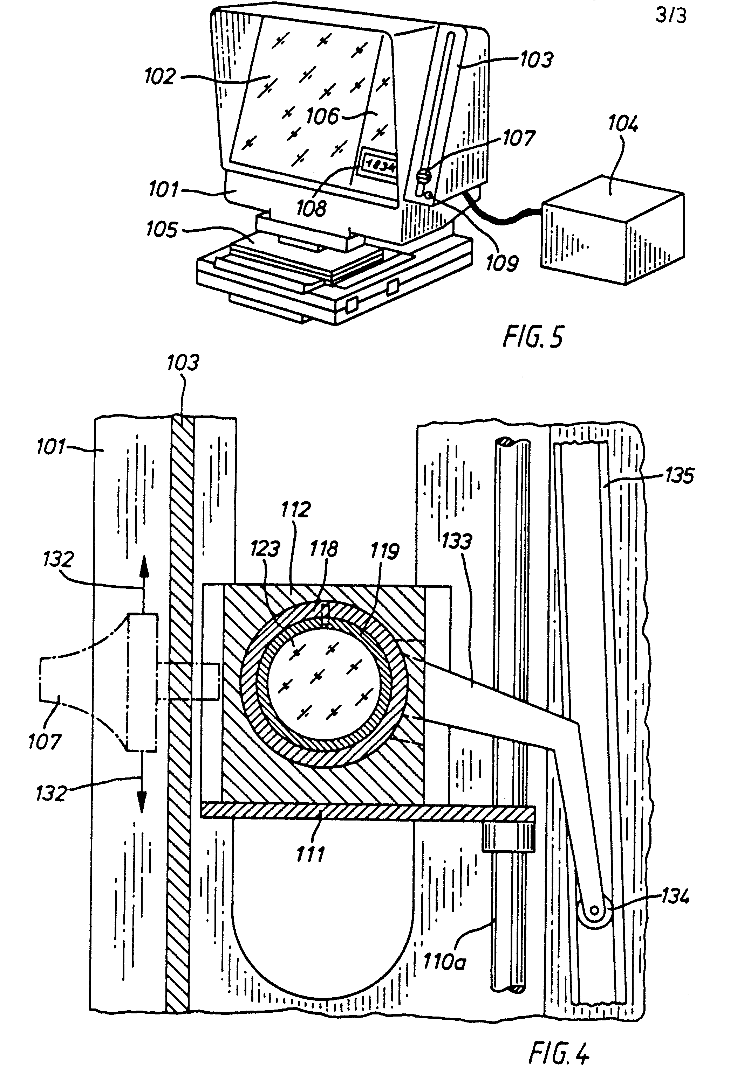

Würde nun der Umlenkspiegel 122 während der Lesebewegung hinter dem Rahmen 108 und während der Veränderung seiner Stellung durch vertikales Verschieben des Griffes 107 eine konstante 45°-Neigung aufweisen, so würde infolge des sich am Bildwandrand kontinuierlich ändernden Einfallswinkels des Projektionsstrahlenganges die auf den Empfänger 125 beim automatischen Lesen auffallende Lichtintensität ständig verändert, was zu falschen Ergebnissen führen würde. Daher ist der Umlenkspiegel 122 um eine Achse 130 schwenkbar und wird durch eine Feder 131 mit seinem Ansatz 122a durch eine Ausnehmung 119a gegen eine Kurve 112a am festen Trägerrohr 112 gezogen oder gedrückt. Die Kurve 112a ist so geneigt bzw. geformt, daß sich die Winkelstellung des Umlenkspiegels 122 entsprechend der sich längs der abzutastenden Detailinformation ändernden Winkelstellung der Projektionsstrahlen ändert, wie dies für die zweite Endstellung des Lesers bzw. des Spiegels 122 in Figur 3 strichpunktiert, jedoch der Erkennbarkeit wegen übertrieben stark gezeigt ist. Zur Schwenkung des Umlenkspiegels 122 bei Verstellung in der Höhe (Pfeilrichtung 132 in Figur 4) entsprechend der sich ändernden Richtung des Einfallswinkels der Projektionsstrahlen ist die Hülse 119 im drehbaren Rohr 118 unverdrehbar aber verschiebbar gelagert. Das Rohr 118 weist einen abgewinkelten Steuerarm 133 mit einer Rolle 134 an dessen freiem Ende auf. Die Rolle 134 ist in einer gegenüber der Vertikalen schwach geneigten Nut 135 geführt. Wird an dem Griff 107 der Leser vertikal verschoben zum Ansteuern einer Zeile in dem erfaßbaren Feld 106, so wird über die Nutkurve 135 und den Steuerarm 133 das Rohr 118 zusammen mit der Hülse 119 entsprechend der

A-G 1963

Änderung des Einfallswinkels der einfallenden Projektionsstrahlen gedreht, so daß damit auch der Umlenkspiegel 122 um die optische Achse des Lesersystems ganz schwach gedreht wird und in jeder Stellung die optimale Lage gegenüber dem Projektionsstrahlengang aufweist. Der Umlenkspiegel 122 wird also sowohl während des Lesevorgangs entsprechend seiner Lageveränderung in Richtung der X-Koordinate des Bildschirms mittels der Kurve 112a geschwenkt, als auch bei einer Höhenverstellung in Richtung der Y-Koordinate des Bildschirms über die Kurve 135.

Nun kommt es sehr häufig vor, daß Mikrobilder projiziert werden sollen mit heller Schrift im schwarzen Feld. Im schwarzen Feld läßt sich aber der Rahmen 108 nicht erkennen, so daß eine Einstellung des Lesers auf die ausgewählte Detailinformation sehr schwierig ist. Deshalb wird vor oder hinter dem Rahmen 108 ein kontraststarkes, durchsichtiges Farbfilter 136 vorgesehen. Wird der Rahmen 108 über eine gewünschte helle, auf dunklem Grund befindliche Detailinformation geschoben, so wird der helle Teil der Information durch das Farbfilter 108 gefärbt, so daß ein Benutzer hierdurch weiß, daß bzw. ob der Rahmen 108 über der zu lesenden Information liegt.

Naturgemäß sind noch andere der Einfachheit halber nicht gezeigte Ausgestaltungen möglich. So wäre es möglich, die Höhenverstellung des Lesers motorisch vorzunehmen und auch die hierzu proportionale Drehung der Hülsen 118, 119 über ein Untersetzungsgetriebe eines bzw. des entsprechenden Elektromotors durchzuführen.

A-G 1963

0161601

## Ansprüche

1.  Abtaster (OCR-Schriftleser) zum automatischen Lesen von leuchtenden Detailabbildungen eines vergrößerten Mikrobildes in einem Mikrofilm-Lesegerät mit einer Bildwand und einem ein Mikrobild auf diese abbildenden Projektionsstrahlengang, wobei der Abtaster eine über die Detailabbildung führbare optische Vorrichtung aufweist, durch die die Detailabbildung abschnittweise auf einen mit der optischen Vorrichtung bewegbaren elektrooptischen Empfänger abbildbar ist, dadurch gekennzeichnet, daß der Abtaster (10, 19; 103, 119) im Auflicht des Projektionsstrahlenganges vor der Bildwand (6; 102, 106) anzuordnen ist und daß vor seiner optischen Vorrichtung (21; 123, 124) ein gegen den Projektionsstrahlengang unter etwa 45° geneigter, den Projektionsstrahlengang auf die optische Vorrichtung (21; 123, 124) und den elektrooptischen Empfänger (22; 125) ablenkender Umlenkspiegel (20; 122) zusammen mit ersteren verschiebbar angeordnet ist.

2.  Abtaster und Lesegerät nach Anspruch 1, dadurch gekennzeichnet, daß die Bildwand (6) eine im Auflicht des Projektionsstrahlengangs angeordnete Auflichtbildwand ist und daß der Abtaster (10, 19) auf die Auflichtbildwand (6), den Umlenkspiegel (20) dem Projektionsstrahlengang zugewendet, aufsetzbar ist.

A-G 1963

3.  Abtaster und Lesegerät nach Anspruch 1, dadurch gekennzeichnet, daß die Bildwand (102) eine Durchlichtbildwand ist, vor die im Auflicht des Projektionsstrahlengangs der Abtaster (119, 122, 123, 124, 125) in einem Bildwandrandbereich (106) schiebbar ist.

4.  Abtaster und Lesegerät nach Anspruch 3, dadurch gekennzeichnet, daß zwischen Abtaster (119, 122) und Bildwandrandbereich (106) ein auf einem senkrecht zur Verschieberichtung des Abtasters (119, 122) verschiebbaren Träger (111) angeordneter, den Bereich einer lesbaren Detailabbildung umgrenzender Rahmen (108) vorgesehen ist.

5.  Abtaster und Lesegerät nach Anspruch 3 oder 4, dadurch gekennzeichnet, daß zwischen Abtaster (119, 122) und Bildrandbereich (106) ein auf einem senkrecht zur Verschieberichtung des Abtasters (119, 122) verschiebbaren Träger (111) angeordnetes, den Bereich einer lesbaren Detailabbildung überdeckendes, durchsichtiges Farbfilter (136) vorgesehen ist.

6.  Abtaster nach einem der vorhergehenden Ansprüche, dadurch gekennzeichnet, daß der Umlenkspiegel (122) mittels einer in Abtastrichtung bzw. in Richtung einer zu lesenden Abbildungszeile einer Detailabbildung verlaufenden Steuerkurve (112a) gegenüber der optischen Achse (137) der optischen Vorrichtung (123, 124)

A-G 1963

in seiner Winkelstellung kontinuierlich variierbar ist.

7. Abtaster nach Anspruch 6, dadurch gekennzeichnet, daß der Umlenkspiegel (122) mit einem Vorsprung (122a) unter der Wirkung einer Feder (131) durch eine Ausnehmung (119a) einer die optische Vorrichtung aufnehmenden dreh- und verschiebbaren Hülse (119) hindurch in Anlage an der Steuerkurve (112a) haltbar ist.

8. Abtaster nach den Ansprüchen 4 und 7, dadurch gekennzeichnet, daß die Hülse (119) unverdrehbar und verschiebbar in einem im Träger (111) drehbar gelagerten Rohr (118) angeordnet ist, das über eine in Abhängigkeit von der Höheneinstellung des Trägers (111) wirksame Dreheinrichtung (133, 135) zusammen mit dem Umlenkspiegel (122) entsprechend der Veränderung des Lichteinfallwinkels des Projektionsstrahlenganges in verschiedenen Höhen drehbar ist.

9. Abtaster nach Anspruch 8, dadurch gekennzeichnet, daß mit dem Rohr (118) ein im wesentlichen radialer Steuerarm (133) verbunden ist, dessen freies, mit einer Rolle (134) versehenes Ende in einer gegenüber der Vertikalen schwach geneigten Nutkurve (135) geführt ist.

Hierzu  3  Blatt Zeichnungen

A-G 1963

FIG. 1

FIG. 2

FIG. 3

FIG. 5

FIG. 4